# EUROPEAN PATENT APPLICATION

(11) **EP 3 064 305 A1**
(43) Date of publication of application: **07.09.2016**
(21) Application number: 15000597.3
(22) Date of filing: 03.03.2015
(51) Int. Cl.: B23K 9/173, B23K 9/23, B23K 35/28, B23K 35/38, C22C 21/02, C22C 21/04, C22C 21/08, B23K 35/00

(54) **WELDED PARTS COMPRISING ARC-WELDED WROUGHT COMPONENTS MADE OF 6XXX SERIES ALUMINIUM ALLOYS, TYPICALLY FOR TRANSPORTATION APPLICATIONS**

(71) Applicant: Constellium Valais SA (AG, Ltd), 3960 Sierre (CH)
(72) Inventor: Skubich, Alexis, 8004 Zurich (CH); Laye, Julien, 38340 Voreppe (FR); Tirard-Collet, Rolland, 38340 Voreppe (FR); Jarrett, Martin, Little Bourton, Oxfordshire OX17 1RB (GB)
(74) Representative: Constellium - Propriété Industrielle

(57) **Abstract**

A welded part comprising at least a 6xxx series aluminium alloy wrought product connected to the rest of the said welded part by a junction weld obtained by arc-welding, characterized in that
a) the said arc-welding is made using a 5xxx series alloy filler wire and
b) the said 6xxx series aluminium alloy of the wrought product has the following composition (contents expressed in percentages by weight):
0.3 ≤ Si ≤ 1.0
Fe ≤ 0.7
Cu ≤ 0.1
Mn ≤ 1
0.35 ≤ Mg ≤ 1.2
Cr ≤ 0.35
Zn ≤ 0.20
0.05 ≤ Ti ≤ 0.2
V ≤ 0.2
other elements and unavoidable impurities < 0.05 each and 0.15 total, rest aluminium wherein the ratio Mg/(Si-0.3*(Mn+Fe)) is higher than 1.0

## Description

The invention relates to welded assemblies, which comprise arc-welded wrought components made of 6xxx series aluminium alloys and are adapted for use as parts predominantly in, but not limited to, the transportation sector, for example as parts of land transportation vehicles (rail, automotive, etc.), such as floors, seats, reinforcements, stiffeners, bumpers, frames, crash-boxes, etc. In the frame of the present invention, the joints are obtained by arc-welding, typically TIG (tungsten inert gas), MIG (metal inert gas) or CMT (cold metal transfer). For such parts not only the basic materials but also the junction welds and the areas near the latter should exhibit improved mechanical properties.

Unless otherwise stated, all information concerning the chemical composition of the alloys is expressed as a percentage by weight based on the total weight of the alloy. "6xxx aluminium alloy" or "6xxx alloy" designate an aluminium alloy having magnesium and silicon as major alloying elements. "AA6xxx-series aluminium alloy" designates any 6xxx aluminium alloy listed in "International Alloy Designations and Chemical Composition Limits for Wrought Aluminum and Wrought Aluminum Alloys" published by The Aluminum Association, Inc.. Unless otherwise stated, the definitions of metallurgical tempers listed in the European standard EN 515 will apply. Static tensile mechanical characteristics, in other words, the ultimate tensile strength Rₘ (or UTS), the yield strength at 0.2% plastic elongation R_{p0,2} (or YTS), and elongation A% (or E%), are determined by a tensile test according to NF EN ISO 6892-1..

From US 4 909 861 it is known to obtain arc-welded assemblies comprising aluminum alloy sheets made from an aluminium alloy consisting essentially of 0.5 to 1.4 wt.% magnesium, 0.6 to 1.5 wt.% silicon, 0.005 to 0.1 wt.% titanium and less than 0.1 wt.% copper, and aluminum and inevitable impurities for the remainder, the ratio of the silicon content to the magnesium content being 0.65 or more. These aluminum alloy sheets are claimed having good weldability, filiform corrosion resistance, formability, and bake-hardenability. However, the weldability was only evaluated on stress-free junction welds made using a 4043 filler wire by merely counting the number of micro-cracks observed in the heat affected zone (HAZ).

However, there is still the need to have welded joints with improved mechanical properties, in particular an improved compromise between strength and ductility, and welds manufactured using 5xxx filler wires generally provide higher strength than those manufactured using 4xxx filler wires as stated in "Table 5 Recommended filler metals for welding wrought aluminium alloys" from Alusuisse datasheet "TIG and MIG Welding of Aluminium Alloys - Edition December 1999".

For the reason above, in the frame of the present invention, the joints are obtained by arc-welding using a 5xxx-series aluminium alloy as filler material. But the replacement of a 4xxx filler wire with a 5xxx filler wire renders the manufacturing of the parts more sensitive to the occurrence of micro-cracks during arc-welding. This is essentially due to the fact that 5xxx alloys of the filler wires have a far higher solidus than 4xxx and than the base material. The weldability of 6xxx-series aluminium alloys to be used for manufacturing the targeted welded parts should consequently be defined with more details than in US 4 909 861, such that the weld junctions can be more accurately controlled.

If subjected to arc-welding, the Al-Mg-Si alloys may sometimes suffer minor microcracks, in particular in the partially melted zone (PMZ), which is the area of the heat affected zone (HAZ) adjacent to the fusion zone (FZ), especially if the filler material is a 5xxx-series aluminium alloy and the weld junction is stress-prone. The main reason for this is that alloys containing eutectic phases, such as 6xxx alloys, will systematically, as inherent to the welding process, display localised melting of these eutectic phases (liquations) in the partially melted zone (PMZ), area of the heat affected zone (HAZ) adjacent to the fusion zone (FZ). Liquations can be more or less pronounced according to the alloy composition, temper and welding conditions. However their presence or absence cannot be directly related in a systematic manner to macro-properties such as, but not limited to, fatigue resistance and tensile strength. Indeed first the investigations of the welded zone are generally led on a limited area of the weld (<0.01% which raises the question about the relevance of such a punctual evaluation) and second, according to the type of liquations (size, location, orientation, inter-/trans-granular) linked to the thermomechanical conditions at the time of their generation, the impact on macro-properties varies considerably.

For this reason, the arc-weldability of a 6xxx series aluminium alloy is complex to define as subject to interpretation and subjective evaluation. An obvious example is found in the ISO 10042:2005 "Welding - Arc-welded joints in aluminium and its alloys - Quality levels for imperfections", where for the higher quality standards (C and B grades) the acceptance level for micro-cracks, also referred to as liquations, liquation cracks and grain-boundary openings, is not clearly defined and left open to interpretation (See Table 1, item 2.2 (micro-cracks) of ISO 10042:2005). This is all the more problematic that welded components that undergo high tensile stresses during welding in the partially melted zone (PMZ) as the PMZ is not fully solidified when welded with 5xxx filler wire, because the solidus of the diluted zone is higher than solidus of base material, may display liquation cracks which significantly embrittle the welded joint as described in the SUPPLEMENT TO THE WELDING JOURNAL, APRIL 2004- Liquation Cracking in Full-Penetration Al-Mg-Si Welds - C. HUANG AND S. KOU.

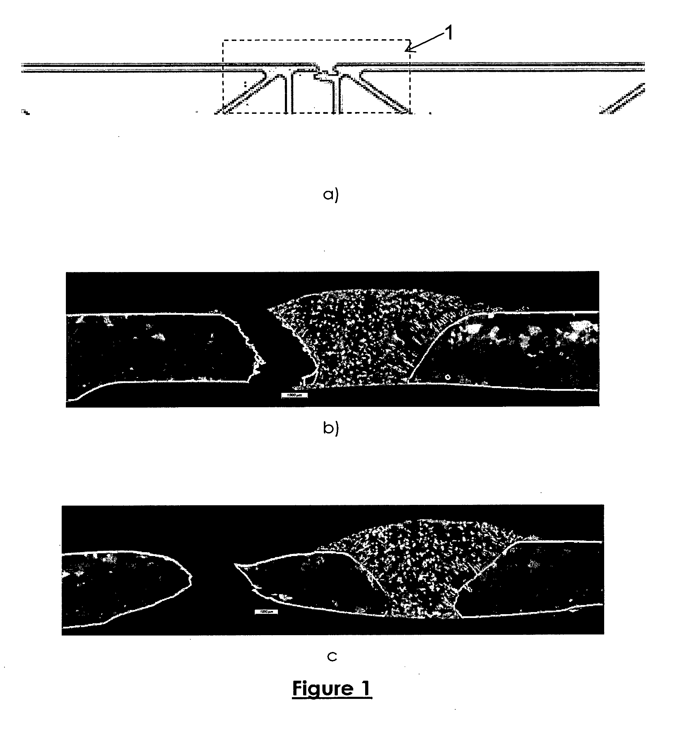

In the frame of the present invention, a welding test-configuration representative of those currently used in the transportation sector, was selected, which is illustrated in Figure 1.

In order to proceed with quantitative evaluation of weldability, the latter has been defined as bending resistance and tensile strength of welds obtained from the selected test-configuration - as measured according to ISO 15614-2, ISO 4136 and ISO 5173.

An object of the invention is a welded part comprising at least a 6xxx series aluminium alloy wrought product connected to the rest of the said welded part by a junction weld obtained by arc-welding, characterized in that:
a) the said arc-welding is made using a 5xxx series alloy filler wire;
b) the 6xxx series aluminium alloy of the said wrought product has the following chemical composition (contents expressed in percentages by weight):
   0.3 ≤ Si ≤1.0
   Fe ≤ 0.7, preferably 0.35
   Cu ≤ 0.1, preferably 0.05
   Mn ≤ 1
   0.35 ≤ Mg ≤ 1.2
   Cr ≤ 0.35, preferably 0.10, more preferably 0.08
   Zn ≤ 0.20
   0.05 ≤ Ti ≤ 0.2, preferably 0.08 ≤ Ti ≤ 0.14
   V ≤ 0.2
   other elements and unavoidable impurities < 0.05 each and 0.15 total,
   rest aluminium,
   wherein the ratio Mg/(Si-0.3*(Mn+Fe)) is higher than 1.0.

The chemical composition of the 6xxx series aluminium alloy of the wrought product, which is a component of the welded part according to the invention was defined to obtain high arc-weldability with 5xxx filler material for wrought applications predominantly in, but not limited to, the transport sector by controlling Mg/free Si ratio, adding a controlled content of peritectic elements as, but not limited to, Ti, while controlling Cu and Cr contents. These cumulative controls (Mg/Si free, Ti, Cu and Cr) were defined to obtain arc-welded parts having an improved compromise between strength and ductility, whatever are the temper, the 5xxx filler composition, the microstructure of the wrought product before welding and the arc-welding conditions.

Magnesium is an element which serves, in conjunction with Si, to improve the strength of the aluminium alloy wrought product. If the Mg content is less than 0.35%, the strength of the base material is too low. If the Mg content exceeds 1.2%, on the other hand, the formability of the base material is suboptimal.

Silicon is an element which serves, in conjunction with Mg, to improve the strength of the aluminium alloy wrought product. If the Si content is less than 0.3%, the strength of the base material is suboptimal. If the Si content exceeds 1.0% on the other hand, solidus is excessively low and sensitivity to liquation cracks too high, although the strength of the alloy is improved. Preferably, Si content is between 0.50 % and 0.94%.

Moreover, although the Mg and Si contents are restricted within the above ranges, if the ratio of Mg to Si free (weight contents) is less than 1.0, the bendability of the junction welds is suboptimal. Si free is the part of the silicon, which is not trapped by elements other than magnesium, mainly iron and manganese, to form precipitates other than hardening precipitates Mg2Si. The Si free content is roughly estimated by Si free= Si - 0.3*(Fe+Mn), where Si, Mn and Fe are weight contents. Accordingly, ratio Mg/(Si-0.3*(Mn+Fe)), which is approximately the Mg-to-Si free ratio, is adjusted to 1.0 or more.

To have an improved compromise between strength and extrudability, as defined by flow stress, Mg in strong excess is to be avoided, i.e. ratio Mg/(Si-0.3*(Mn+Fe)) is preferably lower than 1.7, more preferably 1.5. In such a composition range, Mg controls the formation of Mg2Si precipitates. In order to maximize R_{p0,2} and Rₘ after short maturation time, Mg content is preferably higher than 0.6 wt.%.

Titanium is an element which serves to improve the ductility of the aluminium alloy cast and wrought product. Moreover, it has been found in the frame of this invention that a controlled content of titanium in the base material improves the weldability, in particular the bendability of the junction weld. To attain this effect, Ti should be voluntary added during casting at 0.05 wt.% or more either in the form of an Al-Ti master alloy, or in the form of a grain refining Al-Ti-B master (TiB2 particles). When comparing the solidified structure in the fusion zone (FZ) of the tested junction welds where the corresponding base material is with or without Ti additions, it clearly appears that Ti addition unambiguously leads to a refinement of the microstructure of the FZ, even if 5xxx filler materials generally already contain a voluntary addition of Ti (ca. 0.10 wt.%). It is believed that Ti voluntary additions reduce the liquation crack sensitivity. If Ti content exceeds 0.2%, however, large intermetallic compounds are produced. Preferably, Ti content is higher than 0.08 wt.% to have a significant effect. Preferably, Ti content is lower than 0.14 wt.%.

Manganese, iron and vanadium serve to control the microstructure of the aluminium alloy wrought product. If their contents increase, however, large intermetallic compounds are produced, thereby lowering the formability of the base material and the bendability of the junction welds. Manganese content is 1.0 wt.% or less. Vanadium content is 0.2 wt.% or less. Iron content is lower than 0.7 wt.%, preferably 0.35 wt.%.

Zinc is merely an impurity in 6xxx alloys but may affect corrosion resistance at high levels. Zinc content is 0.20 wt.% or less.

Copper and chromium could also serve to improve the strength of the aluminium alloy wrought product. However, their content should be kept at low levels.

The simultaneous addition of titanium and copper present an excellent welding behaviour with regards to tensile properties but may exhibit a suboptimal bending behaviour if Cu content is too high. Cu content is lower than 0.10%, preferably 0.05 %. It is believed that Cu additions, by further reducing solidus temperature of the base material increase the liquid fraction in the partially melted zone (PMZ) at the point where the fusion zone (FZ) solidifies and retracts, generating relatively high stress levels in the PMZ.

The simultaneous addition of titanium and chromium present an excellent welding behaviour with regards to tensile properties but may exhibit a suboptimal bending behaviour if Cr content is too high. Cr content is lower than 0.35%, preferably 0.10 %, more preferably 0.08 wt.%. It is believed that Cr addition increases quench sensitivity and thereby increases the formation of Mg2Si precipitates on Cr phase particles during the post-weld cooling and hence decreases the material ductility.

Advantageously, the aluminium alloy of the said wrought product is AA6005A or, preferably, an alloy, called "Ti-doped 6005A", having the composition of AA6005A, except for titanium, which has a content between 0.05 and 0.2 wt.%, preferably between 0.08 wt.% and 0.14 wt.%.

Advantageously, the aluminium alloy of the said wrought product is AA6008 or, preferably, an alloy, called "Ti-doped 6008", having the composition of AA6008, except for titanium, which has a content between 0.05 and 0.2 wt.%, preferably between 0.08 wt.% and 0.14 wt.%.

More advantageously, the aluminium alloy of the said wrought product is AA6082 or AA6106, and preferably, an alloy, called "Ti-doped 6082" or "Ti doped 6106", having the composition of AA6082 respectively 6106, except for titanium, which has a content between 0.05 and 0.2 wt.%, preferably between 0.08 wt.% and 0.14 wt.%.

According to the invention, said wrought product may be an extruded profile or a rolled part or a forged one and can be used especially for a transportation vehicle.

Another object of the invention is a process for manufacturing a welded part comprising a least a 6xxx-series aluminium alloy wrought product welded to the rest of the said welded part, comprising the following steps:
i. providing the said wrought product;
ii. linking the said wrought product to another part of the said welded part by arc-welding with a filler material;
   characterised in that
iii. the filler material is a 5xxx series alummium alloy
iv. the 6xxx-series aluminium alloy of the said wrought product has the following composition:
   0.3 <_ Si <_ 1.0
   Fe ≤ 0.7, preferably 0.35
   Cu ≤ 0.1, preferably 0.05
   Mn ≤ 1
   0.35 ≤ Mg ≤ 1.2
   Cr ≤ 0.35, preferably 0.10, more preferably 0.08
   Zn ≤ 0.20
   0.05 ≤ Ti ≤ 0.2, preferably 0.08 ≤ Ti < 0.14
   V ≤ 0.2
   other elements and unavoidable impurities < 0.05 each and 0.15 total, rest aluminium
   wherein the ratio Mg/(Si-0.3*(Mn+Fe)) is higher than 1.0.

Advantageously, the5xxx series aluminium alloy of the said filler material belongs to the group consisting in AA5183, AA5087 and AA5356. Advantageously, the aluminium alloy of the said wrought product is a Ti-doped 6005A, Ti-doped 6008, Ti-doped AA 6106 and Ti-doped 6082.

The welded assemblies according to the invention exhibit improved mechanical properties such as strength, ductility and bendability such that they do react better in case of an impact, and even can have a high energy absorption capacity through plastic deformation under a crash load. EXAMPLE The quantitative evaluation of the weldability of various 6xxx-series aluminium alloys was based on the measurement of the tensile strength and the bending resistance of junction welds made by arc-welding edge-to-edge, with a same filler material and in a same spatial configuration, extruded profiles having a same geometry.

Various 6xxx-series aluminium alloys were extruded to form 3 mm thick floor profiles adapted to be joined together edge-to-edge. All of these alloys were extruded from homogenised DC-cast material in diam. 395mm, quenched and aged to T6 temper before being welded.

The chemical composition of the tested profile alloys is listed in table I.

**Table I**

| Alloy | Si | Fe | Cu | Mn | Mg | Cr | Ti | V | Mg/(Si-0.3*(Fe+Mn)) |
|---|---|---|---|---|---|---|---|---|---|
| A | 0.58 | 0.20 | 0.00 | 0.14 | 0.58 | 0.00 | 0.02 | 0.01 | 1.21 |
| B | 0.58 | 0.20 | 0.00 | 0.08 | 0.57 | 0.09 | 0.10 | 0.01 | 1.15 |
| C | 0.55 | 0.20 | 0.00 | 0.15 | 0.55 | 0.00 | 0.10 | 0.01 | 1.24 |
| D | 0.57 | 0.20 | 0.12 | 0.15 | 0.58 | 0.01 | 0.09 | 0.01 | 1.25 |
| E | 0.67 | 0.18 | 0.00 | 0.15 | 0.70 | 0.00 | 0.10 | 0.01 | 1.24 |
| F | 0.63 | 0.18 | 0.14 | 0.14 | 0.48 | 0.00 | 0.04 | 0.01 | 0.90 |
| G | 0.50 | 0.18 | 0.02 | 0.07 | 0.58 | 0.00 | 0.01 | 0.01 | 1.36 |
| H | 0.62 | 0.18 | 0.15 | 0.07 | 0.55 | 0.00 | 0.02 | 0.06 | 1.01 |
| I | 0.68 | 0.26 | 0.10 | 0.20 | 0.46 | 0.08 | 0.03 | 0.01 | 0.85 |

The junction welds were made by arc-welding under following conditions:
Filler wire : AA5183 (AlMg4.5Mn) - 1.6mm diameter.
Welding speed : 75 cm/min
Voltage: 24 V
Current intensity : 225 A
Protection gas : 100% Ar
Heat input: 3.45kJ/cm
Profile thickness at weld tip (side with backing): 3.5mm

Figure 1 a) illustrates the welding test configuration.

Fig. 1 b) and c) illustrate respectively a brittle fracture in the partially melted zone (near the fusion zone) of a tensile specimen representative of a sub-optimal weld performance and a ductile fracture in the heat affected zone (far from the fusion zone) representative of an optimal weld performance

The tensile properties and bending behaviour of the arc-welded joints are listed in Table II. To compare the behaviour of the junction welds, we used the following classification (bending rating):
1: cracks appearing on the sample surface when the bending angle is < 45°
2: cracks appearing on the sample surface when the bending angle is < 90°
3: bending angle 180° reached with cracks larger than 3mm
4: bending angle 180° reached with cracks smaller than 3mm
5: bending angle 180° reached without cracks

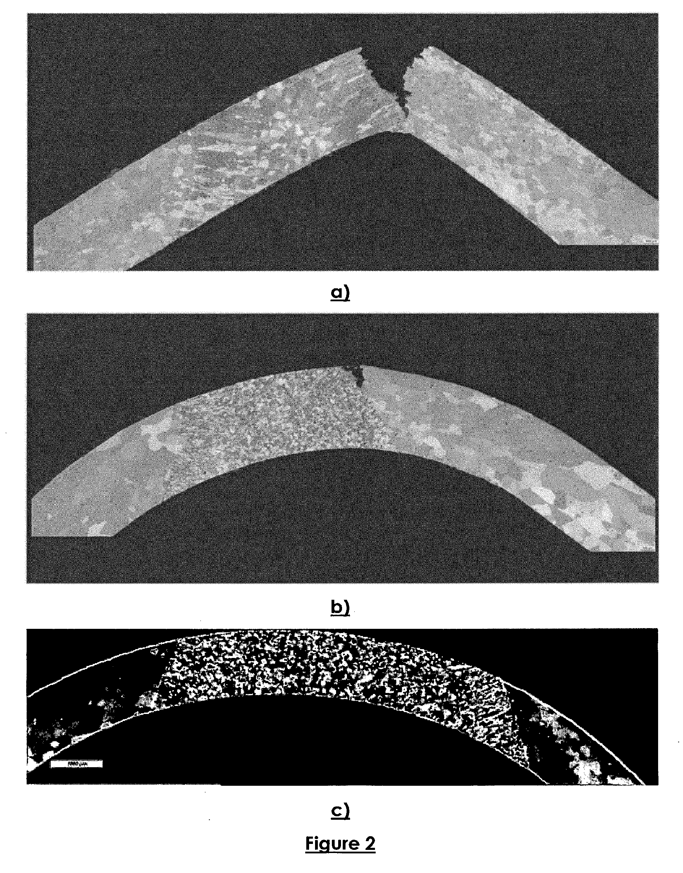

Fig.2 illustrates the cross-section of three bent samples. Fig.2a) illustrates the bent sample corresponding to a junction weld obtained with alloy A (bending rating 1). Fig.2b) illustrates the bent sample corresponding to a junction weld obtained with alloy B (bending rating 3). Fig.2c) illustrates the bent sample corresponding to a junction weld obtained with alloy C (bending rating 5).

**Table 2 : Tensile test properties of welded joints from tested alloys**

| Alloy | UTS (MPa) Min. 165 | YS (MPa) Min. 115 | A50 (%) | Bending rating |
|---|---|---|---|---|
| A | 186 | 125 | 3.3 | 1 |
| B | 171 | 119 | 2.2 | 3 |
| C | 180 | 121 | 4.5 | 5 |
| D | 199 | 130 | 4.4 | 1 |
| E | 190 | 130 | 4.5 | 3-4 |
| F | 134 | 116 | 0.9 | 1 |
| G | 170 | 118 | 2.2 | 1 |
| H | 186 | 125 | 2.8 | 1 |
| I | 194 | 125 | 4.1 | 2 |

The results show that:
i) alloys presenting a low Mg to free Si ratio (inf. to 1.0) and containing no peritectic elements (Cr, Ti, V,...), such as alloys F, present a reduced welded performance with suboptimal tensile properties and suboptimal bending behavior. The base material made out of such alloys also generally display suboptimal ductility, as assessed by bending, in hardened tempers (T64, T6 and T7).
ii) alloys presenting a low Mg to free Si ratio and containing peritectic elements (Cr, Ti, V) and Cu in small quantities, such as alloy I, present an acceptable welding behaviour with regards to tensile properties but have a suboptimal bending behavior.
iii) alloys presenting a high Mg to free Si ratio (sup. to 1.0) and containing no voluntary additions of peritectic elements, such as alloys A (Fig. 2 a)) and G, present an acceptable welded performance with regards to tensile properties but bending behaviour is suboptimal;
iv) alloys presenting a high Mg to free Si ratio (sup. to 1.0) and containing voluntary additions of solely Ti as peritectic element, such as alloys C (Fig. 2 c)) and E, present an excellent welded performance with regards to tensile properties and bending behaviour. Base material made out of such alloys display an excellent ductility, as assessed by bending, in hardened tempers (T64, T6 and T7);
v) alloys presenting a high Mg to free Si ratio (sup. to 1.0) and containing voluntary additions of peritectic element Ti and Cr, such as alloy B (Fig. 2 b)), present an excellent welded performance with regards to tensile properties and a close to optimal bending behaviour. The lower bending performance in comparison to alloys C and E of iii) is linked to the Cr addition, which increases quench sensitivity and thereby increases grain boundary precipitation during the post-weld cooling and hence decreases the material ductility;
vi) alloys presenting a high Mg to free Si ratio (sup. to 1.0), voluntary additions of peritectic element Ti and Cu-additions, such as alloys D and H, present an excellent welded performance with regards to tensile properties but a suboptimal bending behaviour. Cu additions, by further reducing solidus temperature of the base material, increase the liquid fraction in the partially melted zone (PMZ) at the point when the fusion zone (FZ) solidifies (as FZ presents a solidus temperature higher than the base material) and retracts generating relatively high stress levels in the PMZ.

## Claims

1. A welded part comprising at least a 6xxx series aluminium alloy wrought product connected to the rest of the said welded part by a junction weld obtained by arc-welding, **characterized in that**
a) the said arc-welding is made using a 5xxx series alloy filler wire and
b) the said 6xxx series aluminium alloy of the wrought product has the following composition (contents expressed in percentages by weight):
0.3 ≤ Si ≤ 1.0
Fe ≤ 0.7, preferably 0.35
Cu ≤ 0.1, preferably 0.05
Mn ≤ 1
0.35 ≤ Mg ≤ 1.2
Cr ≤ 0.35, preferably 0.10, more preferably 0.08
Zn ≤ 0.20
0.05 ≤ Ti ≤ 0.2
V ≤ 0.2
other elements and unavoidable impurities < 0.05 each and 0.15 total, rest aluminium wherein the ratio Mg/(Si-0.3*(Mn+Fe)) is higher than 1.0

2. A welded part according to claim 1, **characterised in that** the ratio Mg/(Si-0.3*(Mn+Fe)) of the 6xxx series aluminium alloy of the wrought product is lower than 1.7, preferably 1.5.

3. A welded part according to claim 1 or 2, **characterised in that** the magnesium weight content of the aluminium alloy of the said wrought product is higher than 0.6 %.

4. A welded part according to any of claims 1 to 3, **characterised in that** the silicon weight content of the aluminium alloy of the said wrought product is between 0.50 % and 0.94%.

5. A welded part according to any of claims 1 to 4, **characterised in that** the titanium weight content of the aluminium alloy of the said wrought product is higher than 0.08 %.

6. A welded part according to any of claims 1 to 5, **characterised in that** the titanium weight content of the aluminium alloy of the said wrought product is lower than 0.14 %.

7. A welded part according to any of claims 1 to 5, **characterised in that** the aluminium alloy of the said wrought product is AA6005A or, preferably, an alloy having the composition of AA6005A, except for titanium, which has a content between 0.05 and 0.2 wt.%, preferably between 0.08 wt.% and 0.14 wt.%.

8. A welded part according to any of claims 1 to 5, **characterised in that** the aluminium alloy of the said wrought product is AA6008 or, preferably, an alloy having the composition of AA6008, except for titanium, which has a content between 0.05 and 0.2 wt.%, preferably between 0.08 wt.% and 0.14 wt.%.

9. A welded part according to any of claims 1 to 5, **characterised in that** the aluminium alloy of the said wrought product is AA6082 or, preferably, an alloy having the composition of AA6082, except for titanium, which has a content between 0.05 and 0.2 wt.%, preferably between 0.08 wt.% and 0.14 wt.%.

10. A welded part according to any of claims 1 to 5, **characterised in that** the aluminium alloy of the said wrought product is AA6106 or, preferably, an alloy having the composition of AA6106, except for titanium, which has a content between 0.05 and 0.2 wt.%, preferably between 0.08 wt.% and 0.14 wt.%.

11. A welded part according to any of claims 1 to 10, **characterised in that** the said wrought product is an extruded profile.

12. A welded part according to any of claims 1 to 10, **characterised in that** the said wrought product is a forged part.

13. A welded part according to any of claims 1 to 10, **characterised in that** the said wrought product is a rolled part.

14. Use of a welded part according to any of claims 1 to 13 as part of a transportation vehicle.

15. A process for manufacturing a welded part comprising a least a 6xxx-series aluminium alloy wrought product welded to the rest of the said welded part, comprising the following steps:
v. providing the said wrought product;
vi. linking the said wrought product to another part of the said welded part by arc-welding with a filler material;
**characterised in that**
vii. the filler material is a 5xxx series aluminium alloy
viii. the 6xxx-series aluminium alloy of the said wrought product has the following composition:
0.3 ≤ Si ≤ 1.0
Fe ≤ 0.7, preferably 0.35
Cu ≤ 0.1, preferably 0.05
Mn ≤ 1
0.35 ≤ Mg ≤ 1.2
Cr ≤ 0.35, preferably 0.10, more preferably 0.08
Zn ≤ 0.20
0.05 ≤ Ti ≤ 0.2, preferably 0.08 ≤ Ti ≤ 0.14
V ≤ 0.2
other elements and unavoidable impurities < 0.05 each and 0.15 total, rest aluminium
wherein the ratio Mg/(Si-0.3*(Mn+Fe)) is higher than 1.0

16. A process for manufacturing a welded part according to claim 11, wherein the5xxx series aluminium alloy of the said filler material belongs to the group consisting in AA5183, AA5087 and AA5356.
